# EUROPÄISCHE PATENTSCHRIFT

(11) **EP 1 563 763 B1**
(45) Veröffentlichungstag und Bekanntmachung des Hinweises auf die Patenterteilung: **11.04.2007**
(21) Anmeldenummer: 05003152.5
(22) Anmeldetag: 15.02.2005
(51) Int. Cl.: A47B 88/04

(54) **Dämpfungsvorrichtung für Möbel**
Damping device for furniture
Dispositif amortisseur pour meubles

(30) Priorität: 17.02.2004 ES 200400369; 26.01.2005 ES 200500139
(43) Veröffentlichungstag der Anmeldung: 17.08.2005
(73) Patentinhaber: Rioja Calvo, Miguel Angel, 20800 Zarautz (Guipuzcoa) (ES)
(72) Erfinder: Rioja Calvo, Miguel Angel, 20800 Zarautz (Guipuzcoa) (ES)
(74) Vertreter: Becker Kurig Straus

(56) Entgegenhaltungen:
- DE-U- 20 220 284
- US-A1- 2002 170 794

## Beschreibung

Die vorliegende Erfindung betrifft eine Dämpfungsvorrichtung für Möbel, die dazu dient, Schläge zwischen beweglichen Teilen (Schubläden, Türen) von Möbeln zu vermeiden, und die einer allgemeinen Anordnung entspricht, die einen strömungsdynamischen Zylinder mit einer zähen Flüssigkeit aufweist, der in einem zylindrischen Körper enthalten ist, dessen Länge wesentlich größer als sein Durchmesser ist, und in dessen Ausbuchtung sich über die Länge ein Kolben verschiebt, der eine Stange aufweist, die aus dem Körper hinausragt und jeweils Kompressions- und Expansionskammern begrenzt, die je nach Position des Kolbens ein zwischen dem Minimum und dem Maximum veränderliches Volumen aufweisen.

### STAND DER TECHNIK

Obwohl die Erfindung allgemeiner anwendbar ist, wird aus rein erläuternden Gründen der Fall von Möbelschubläden in Betracht gezogen, die mit Hilfe von ausziehbaren Gleitführungen bewegt werden, die im Wesentlichen aus einem festen Glied bestehen, das mit dem statischen Gestell des Möbels verankert ist und bezüglich dessen ein bewegliches Glied nach außen und nach innen bewegt werden kann, das an der Schublade befestigt ist.

Heutzutage sind diese Gleitführungen für Schubläden gewöhnlich mit Mechanismen ausgestattet, die "Selbsteinzug" genannt werden und die dem beweglichen Glied der Führung einen zusätzlichen Impuls geben, wenn sich die Schublade am Ende der Schließstrecke befindet. Damit wird sichergestellt, dass die Schublade vollkommen geschlossen bleibt, ohne dass der Benutzer besonders darauf achten muss; dies ist aus praktischen und ästhetischen Gründen von großer Bedeutung, wobei das Vermeiden von Verletzungen der Personen, die sich in der Nähe der Schublade aufhalten, mit ihren Obliegenheiten beschäftigt sind und weder darauf achten, die Schublade zu schließen noch darauf hinweisen, dass sie offen ist, und sich daran stoßen oder mit einem wertvollen Gegenstand zusammenstoßen, oder mit einem gefährlichen Gegenstand (Glas) oder einem Gegenstand, der Substanzen enthält, die verschüttet werden oder Schaden anrichten können (heiße Flüssigkeiten, aggressive, chemische Substanzen), besonders wichtig ist; an diese Aspekte sollte nicht nur bei Haushaltsmöbeln gedacht werden, sondern auch bei Industrieküchen, Laboratorien, Testlaboratorien (chemische, physische, klinische). Dennoch weisen diese Selbsteinzugsmechanismen einen unerwünschten Nebeneffekt auf: um das Schließen der Schublade zu gewährleisten, erzeugen sie einen Schlag am Ende der Schließstrecke, was auf Dauer Schäden am Möbel hervorruft, sich negativ auf den Schubladeninhalt auswirkt (auf Grund von Schlägen, Verschiebungen oder Verschütten), ein unangenehmes Geräusch verursacht und ein schlechtes Bild von einem Produkt abgibt, das üblicherweise teuer ist.

Um diese Schläge am Ende des Schließbereichs zu vermeiden, sind viele Dämpfungsvorrichtungen entwickelt worden, die ein sanftes Anhalten der Schublade erreichen. Einige sind sehr komplex und weisen Zahneingriffe oder kippbare Laufrollen auf. Andere basieren mittels Luft oder zäher Flüssigkeiten (Öle und andere) auf dem Druckzylinderkonzept, allerdings mit sehr komplex entworfenen Kolben, wobei als Grundsatz die geringe Größe dieser Vorrichtungen in Betracht gezogen wird, oder sie sind so entworfen, dass die Dämpfung bis zur Bremsung mittels der operativen Verschiebung des Zylinderkörpers bezüglich seines Kolbens erreicht wird, das heißt, der Zylinderkörper selbst wird von dem beweglichen, zu bremsenden Teil (der Schublade) angetrieben, während der Kolben, der mit dem festen Möbelgestell verbunden ist, unbewegt bleibt.

Dokument US-A-4 862 968 offenbart eine Dämpfungsvorrichtung für Möbel mit einem pneumatischen Dämpfer.

Der Zusatz ist eine Verbesserung des Inhalts, der in der Patentschrift geschützt ist, die sich auf eine Dämpfungsvorrichtung für Möbel mit einer Vorrichtung bezieht, die eine allgemeine Anordnung aufweist, die einen strömungsdynamischen Zylinder aus einer zähen Flüssigkeit umfasst, der in einem zylindrischen Körper enthalten ist, dessen Länge wesentlich größer als sein Durchmesser ist, und in dessen Ausbuchtung sich über die Länge ein Kolben fortbewegt, der eine Stange aufweist, die aus dem Körper hinausragt und jeweils Kompressions- und Expansionskammern begrenzt, die je nach Position des Kolbens ein zwischen dem Minimum und dem Maximum veränderliches Volumen aufweisen; und sie weist die Besonderheit auf, dass der Körper statisch mit dem festen Gestell eine Möbelelements verankert bleibt, wobei sich der Kolben selbst bezüglich des statischen Körpers verschiebt, da er mit einem beweglichen Teil dieses Möbelelements verbunden ist, dessen Kolben die Form eines Zylinders aufweist mit einem Durchmesser, der etwas kleiner als der Körperinnenraum ist und der von mindestens zwei Seiten verändert ist, die einander vorzugsweise gegenüberliegen, und im Gegensatz zu seiner Stange weist dieser Kolben sich verjüngende Stufen auf und bildet eine koaxiale Verlängerung, die ebenfalls eine zylindrische Form aufweist, die durch mindestens zwei Seitenflächen verändert ist, die sich vorzugsweise gegenüberliegen, und um die Verlängerung herum ist eine zylindrische Hülse angebracht, die günstigerweise eine geringere Länge und den gleichen Durchmesser wie der Kolben aufweist und die sich entlang der Verlängerung zwischen einem Anschlag, der am Ende der Hülse ausgebildet ist, und ihrem kompletten vorderen Anbau gegen den Kolben selbst frei bewegen kann, da diese Hülse einen etwas geringeren äußeren Durchmesser als den Innendurchmesser des Körpers aufweist und einen Innendurchmesser aufweist, der gleitend bezüglich des Durchmessers der Verlängerung angepasst und kleiner ist als der Durchmesser, der zwischen den Seiten des Kolbens enthalten ist.

Die Funktionsweise dieser anerkannten Vorrichtung ist derart, dass die Dämpfungswirkung immer mit der gleichen Intensität auftritt, unabhängig davon, wie stark die Intensität des Impulses ist, der gedämpft werden soll.

Es ist die Aufgabe dieses Patentzusatzes, eine verbesserte Variante bereitzustellen, die eine Abstufung der Dämpfungswirkung je nach der zu dämpfenden Impulsgeschwindigkeit ermöglicht.

### BESCHREIBUNG DER ERFINDUNG UND VORTEILE

Gegenüber diesem Stand der Dinge weist die vorliegende Erfindung eine Dämpfungsvorrichtung auf, die auf einem strömungsdynamischen Zylinder mit einer zähen Flüssigkeit basiert, in dem der Zylinderkörper statisch mit dem festen Gestell eines Möbelelements verankert bleibt, wobei sich der Kolben bezüglich des statischen Körpers verschiebt, da er mit einem beweglichen Teil dieses Möbelelements verbunden ist, dessen Kolben eine zylindrische Form aufweist, die einen etwas geringeren Durchmesser aufweist als der Körperinnenraum, und die von mindestens einer Seite und vorzugsweise zwei sich gegenüberliegenden Seiten verändert ist, wobei dieser Kolben im Gegensatz zu seiner Stange eine sich verjüngende Abstufung aufweist und so eine koaxiale Verlängerung bildet, die ebenfalls eine zylindrische Form aufweist, die durch mindestens eine und vorzugsweise zwei sich gegenüberliegende Seitenflächen verändert ist, wobei um diese Verlängerung herum eine zylindrische Hülse angebracht ist, die eine geringere Länge und den gleichen Durchmesser wie der Kolben aufweist und die sich entlang der Verlängerung zwischen einem Anschlag, der am Ende der Hülse ausgebildet ist, und ihrer kompletten, vorderen Anlehnung gegen den Kolben selbst frei bewegen kann, da diese Hülse einen etwas geringeren äußeren Durchmesser als den Innendurchmesser des Körpers aufweist und einen Innendurchmesser aufweist, der zwischen dem äußeren Durchmesser der Verlängerung des Kolbens und dem äußeren Durchmesser der Greifer der Verlängerung enthalten ist.

Es ist einleuchtend, dass diese Vorrichtungen für jede erneute Benutzung wiederaufgeladen werden müssen. Folglich muss erreicht werden, dass die Wiederaufladestrecke mit einem wesentlich geringeren Kraftaufwand durchgeführt werden kann als der Widerstand, der sich auf dem Bremsweg entwickelt, das heißt, die Durchflussmenge der Flüssigkeit, die zwischen den durch den Kolben begrenzten Kammern übertragen wird , muss in der Wiederaufladephase wesentlich größer sein als in der Bremsphase.

Dies wird in der vorliegenden Erfindung auf einfache, sparsame und effiziente Art und Weise erreicht, nämlich durch die Verbindung der Hülse, die in der Verlängerung des Kolbens verschiebt werden kann, und der Seiten und Seitenflächen, die jeweils an den zylindrischen Oberflächen des Kolbens und der Verlängerung bereitgestellt werden. Ausgehend von der Position der Kolbenstange, die am meisten hervorragt (Beginn des Bremsweges), wird die Hülse bei Beginn der Verschiebung des Kolbens an diesen Kolben angelehnt, so dass der physische Durchlass zwischen der Hülse und den Seiten und Seitenflächen verschlossen wird und die Übertragung der Flüssigkeit zwischen der Kompressionskammer und der Expansionskammer nur durch den dünnen, kreisförmigen Kranz stattfinden kann, der sich zwischen den Randflächen des Kolbens und der Hülse und der Innenwand des Zylinderkörpers befindet; wenn jedoch der Weg andersherum zurückgelegt wird (Wiederaufladung), verschiebt sich die Hülse bis zum Anschlag an die Spitze der Verlängerung des Kolbens, und die im Vergleich breiten Durchlässe der Flüssigkeiten, die zwischen der Hülse und den Seitenflächen der Verlängerung sowie zwischen den Seiten des Kolbens und der Innenwand des Zylinderkörpers angeordnet sind, bleiben frei.

Die Anordnung und Funktionsweise, die bis jetzt erläutert worden sind, stellen das Wesen der Erfindung unabhängig von ihrer Anwendung beim Schließen von Schubläden, Türen oder anderen Möbelelementen dar.

Für die konkrete Anwendung beim Schließen von Schubläden wird gemäß der Erfindung eine Lösung in Betracht gezogen, in der das feste Gestell durch das feste Glied gebildet ist, das mit einem Möbel verankert ist und zu einer ausziehbaren Führung für die Schublade dieses Möbels gehört, und der bewegliche Teil ist das entsprechende bewegliche Glied dieser ausziehbaren Führung, die mit dieser Schublade verbunden ist, wo der Körper an dem festen Glied befestigt wird, während die Kolbenstange mit einer Träger verbunden ist, der von dem beweglichen Glied angetrieben wird, das wiederum von einer Selbsteinzugsvorrichtung angetrieben wird, die aktivert wird, wenn sich das bewegliche Glied beim Schließen dem Ende der Strecke nähert.

Auf ähnliche Weise ist bei der Anwendung der Vorrichtung, die für das Schließen von Türen verteidigt wird, das feste Gestell gemäß der Erfindung der Vorderrahmen einer Schranktür und der bewegliche Teil die Tür, die über diesem Rahmen schließen soll, wobei der Körper von der Vorderseite des statischen Rahmens eingespannt ist und das Ende der Kolbenstange an der Unterseite eines kappenförmigen Druckknopfes befestigt ist, der um die Stange herum eine schraubenförmige Kompressionsfeder aufnimmt, die zwischen der Unterseite des Druckknopfes und der Vorderseite wirkt, aus der die Stange aus dem Körper hervorragt, und die jeweils Zustände relativer Kompression und maximaler Entspannung annehmen kann, in denen der Druckknopf bezüglich einer Öffnung, die am Ende einer Verlängerung ausgebildet ist, die von der Wand des Körpers bestimmt wird, eingedrückt oder hervorgestreckt sein kann, wobei die Öffnung mit der Vorderseite des Rahmens für die Tür im festen Gestell bündig ist.

Gegenüber diesem Stand der Dinge verteidigt der Patentzusatz eine Variante der zylindrischen Hülse, bei der sich die zylindrische Hülse an der dem Kolben gegenüberliegenden Vorderseite mittels eines elastoplastischen Streifens verlängert, der sich von einem Ende bis zum anderen in Form einer Brücke erstreckt und die Spitze der Verlängerung des Kolbens übertrifft, dessen Streifen von zwei in der Seitenlinie verlaufenden, paraxialen Abschnitten und einem diametralen Abschnitt definiert ist, der sich gemäß eines Hohlprofils erstreckt und im Scheitelpunkt seiner Innenseite einen hervorragenden Teil bildet, der der Spitze der Kolbenverlängerung gegenüberliegt, wobei dieser hervorragende Teil bezüglich der gegenüberliegenden Vorderseite der zylindrischen Hülse in natürlichem Zustand oder im Ruhezustand eine geringere Entfernung aufweist als die operative Länge der Kolbenverlängerung.

Die Funktionsweise, die aus dieser neuen Anordnung der zylindrischen Hülse abgeleitet wird, ist derart, dass von einem bestimmten Grenzwert des Impulses (der als relativ stark betrachtet wird) ausgehend die Dämpfungswirkung mit der gleichen Intensität hervorgerufen wird wie in dem Referenzpatent; denn der diametrale Abschnitt des elastoplastischen Brückenstreifens deformiert sich unmittelbar derart, dass die zylindrische Hülse die Position zur Anlehnung gegen den Kolben erreicht, wodurch gemäß den voranstehenden Erklärungen die physischen Durchlässe zwischen dieser zylindrischen Hülse und den Seiten und Seitenflächen verschlossen werden und die Übertragung der Flüssigkeit zwischen der Kompressions- und Expansionskammer nur durch den dünnen, kreisförmigen Kranz durchgeführt werden kann, der sich zwischen den Randflächen des Kolbens und der Hülse und der Innenwand des Zylinderkörpers befindet. Wenn sich der zu dämpfende Impuls jedoch unter dem Grenzwert befindet, deformiert sich der diametrale Abschnitt des elastoplastischen Brückenstreifens nur teilweise im Verhältnis zu diesem Impuls und lässt nicht zu, dass die Hülse sich an den Kolben anlehnt, was dazu führt, dass der Durchfluss der Flüssigkeit, die zwischen den Kammern umgeleitet wird, in einem bestimmten Maße auch durch die physischen Durchlässe zwischen der zylindrischen Hülse einerseits und den Seiten und Seitenflächen andererseits eintritt; dies bedeutet, dass die Dämpfungs- oder Bremswirkung nicht so intensiv ist wie im vorherigen angenommenen Fall und deshalb sanfter und sogar schneller eintritt. Diese Variante der zylindrischen Hülse betrifft in keiner Weise die Art und Weise, wie der der Wiederaufladeweg erzeugt wird, da die Hülse bis zum Anschlag mit den Greifern des Endes der koaxialen Verlängerung des Kolbens verschiebt wird.

Diese und andere Besonderheiten der Erfindung werden in der folgenden, detaillierten Beschreibung dargelegt.

### ZEICHNUNGEN UND BEZUGSZEICHEN

Um die Natur der vorliegenden Erfindung besser verstehen zu können, wird in den beigefügten Zeichnungen eine bevorzugte Ausführungsform der industriellen Verwirklichung dargestellt, die erläuternden, jedoch nicht eingrenzenden Charakters sind.

Figur 1 zeigt im Längsschnitt eine Dämpfungsvorrichtung gemäß der Erfindung in der Endposition des Bremsweges (24); diese Figur weist eine vergrößerte Einzeldarstellung auf, die sich auf den Kolben (2) in der Endposition im Körper (1) bezieht und die mit einer Zeichnung ergänzt ist, die über der Vergrößerung dargestellt ist, um zu verdeutlichen, wie die Umleitung der Flüssigkeit (23) von der Kompressionskammer (4) zur Expansionskammer (5) nur durch den dünnen, kreisförmigen Kranz stattfinden kann, der sich zwischen dem Kolben (2), der Hülse (11) und dem Zylinderkörper (1) befindet.

Figur 1a ist der Querschnitt, der in der Vergrößerung von Figur 1 dargestellt ist.

Figur 2 zeigt, wie der Kolben (2) das Ende des Bremsweges (24) erreicht, wobei die Sicht die gleiche wie in Figur 1 ist und der Flüssigkeitsstrom mit Pfeilen dargestellt ist.

Figur 3 ist der Grundriss von Figur 2.

Figur 4 und 5 ähneln Figur 2 und 3, beziehen sich jedoch auf den Wiederaufladeweg (25).

Figur 6 und 7 zeigen eine Vorrichtung gemäß der Erfindung, die für eine ausziehbare Gleitführung (13-14) für Möbelschubladen verwendet wird. Figur 6 zeigt die Anfangsposition des Bremsweges (24) und Figur 7 zeigt die Endposition.

Figur 8 ist ein Seitenaufriss des Trägers (15).

Figur 9 ist die rechte Seitenansicht von Figur 8.
Figur 10 ist der Abschnitt X-X, der in Figur 8 dargestellt ist.

Figur 11 ist eine Vergrößerung des Grundrisses, der in Figur 6 gezeigten Einzeldarstellung XI.

Figur 12 und 13 zeigen jeweils im Anfangs- und Endzustand des Bremsweges (24) eine Vorrichtung gemäß der Erfindung, die für das Schließen von Möbeltüren benutzt wird.

Figur 14 ist ein Längsschnitt, der dem in der vergrößerten Einzeldarstellung von Figur 1 ähnlich ist, bei dem jedoch die Variante der zylindrischen Hülse (11) benutzt wird, die Aufgabe dieses Zusatzpatentes ist. In diesem Fall wird der Wiederaufladeweg der Dämpfungsvorrichtung dargestellt.

Figur 15 zeigt die zylindrische Hülse (11) des vorliegenden Zusatzpatents, wie in Figur 14 dargestellt.

Figur 16 ist eine Sicht des Abschnitts XVI-XVI, der in Figur 15 dargestellt ist.

Figur 17 zeigt die rechte Seitenansicht von Figur 15 (nicht im Schnitt dargestellt).

Figur 18 und 19 sind jeweils ähnliche Sichten wie die in Figur 2 und 3, beziehen sich jedoch nun auf die zylindrische Hülse (11) gemäß des vorliegenden Zusatzpatents.

Figur 20 und 21 sind jeweils ähnlich Sichten wie die in Figur 2 und 3, beziehen sich jedoch nun auf die zylindrische Hülse (11) gemäß des vorliegenden Zusatzpatents bei Zurücklegen des Bremsweges bei geringer Anschlaggeschwindigkeit.

Figur 22 und 23 sind jeweils ähnliche Sichten wie die Figur 6 und 7, beziehen sich jedoch nun auf die zylindrische Hülse (11) gemäß des vorliegenden Zusatzpatents.

Figur 24 und 25 sind wie Figur 17 und 15 in einer Ausführung mit mehr als zwei radialen Abschnitten (28a) in Form eines Kreuzes.

Figur 26 und 27 sind wie Figur 17 und 15 und zeigen eine Ausführung mit drei radialen Abschnitten (28a), die in einem Winkel von 120° angeordnet sind.

In diesen Figuren sind die folgenden Bezugszeichen dargestellt:
- 1.-: Zylinderkörper
- 1a.-: Befestigung des Zylinderkörpers (1)
- 2.-: Zylinderkolben
- 3.-: Stange des Kolbens (2)
- 4.-: Kompressionskammer
- 5.-: Expansionskammer
- 6.-: festes Möbelgestell
- 7.-: beweglicher Möbelteil
- 8.-: Seiten des Kolbens (2)
- 9.-: Verlängerung des Kolbens (2)
- 10.-: Seitenflächen der Verlängerung (9)
- 11.-: zylindrische Hülse
- 12.-: Greifer der Verlängerung (9)
- 13.-: festes Glied der ausziehbaren Führung (13-14)
- 14.-: bewegliches Glied der ausziehbaren Führung (13-14)
- 14a.-: Ende der beweglichen Führung (14), die beim Schließvorgang an den Vorsprung (15a) schlägt.
- 15.-: Träger
- 15a.-: Vorsprung des Trägers (15)
- 16.-: Selbsteinzugsvorrichtung
- 17.-: Druckknopf
- 18.-: schraubenförmige Kompressionsfeder
- 19.-: Verlängerung des Körpers (1)
- 20.-: Öffnung der Verlängerung (19)
- 21.-: Volumenausgleichvorrichtung (Schwamm)
- 22.-: hermetischer Verschluss
- 23.-: Übertragungslinien der Flüssigkeit
- 24.-: Bremsweg
- 25.-: Wiederaufladeweg
- 26.-: elastoplastischer Brückenstreifen
- 27.-: paraxiale Abschnitte der elastoplastischen Brückenstreifen (26)
- 28.-: diametraler Abschnitt der elastoplastischen Brückenstreifen (26)
- 28a.-: radialer Abschnitt
- 29.-: hervorragender Teil, der sich in dem elastoplastischen Brückenstreifen (26) befindet

### BESCHREIBUNG EINER BEVORZUGTEN AUSFÜHRUNGSFORM

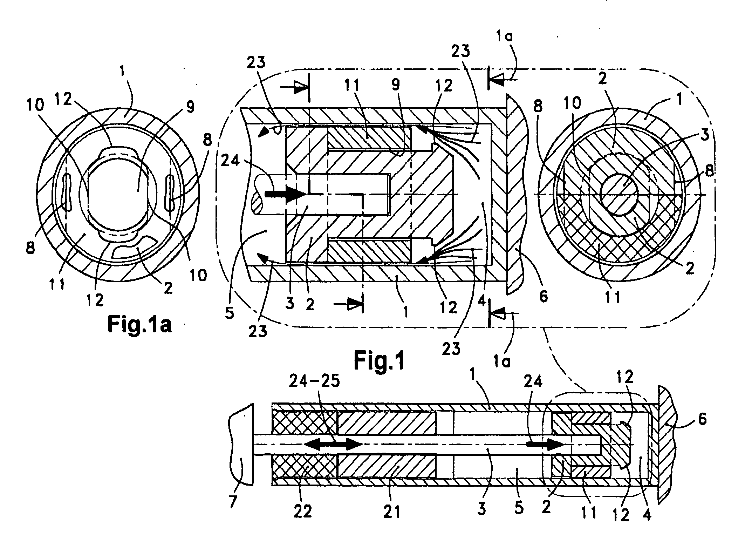

Bezüglich der Zeichnungen und nummerierten Bezugszeichen wird in den beigefügten Zeichnungen das konstitutive Wesen der Erfindung und einige Hauptanwendungen derselben erläutert, wobei sich all diese auf eine allgemeine Anordnung beziehen, die einen strömungsdynamischen Zylinder mit einer zähen Flüssigkeit aufweist, der in einem zylindrischen Körper (1) enthalten ist, dessen Länge größer als sein Durchmesser ist, und in dessen Ausbuchtung sich über die Länge ein Kolben (2) verschiebt, der eine Stange (3) aufweist, die aus dem Körper (1) hinausragt und jeweils eine Kompressionskammer (4) und eine Expansionskammer (5) begrenzt, die je nach Position des Kolbens (2) ein zwischen dem Minimum und dem Maximum veränderliches Volumen aufweisen. Wie Figur 1 deutlich zeigt, besteht das Wesen der Erfindung darin, dass der Körper (1) statisch mit dem festen Gestell (6) eines Möbelelements verankert bleibt, wobei sich der Kolben (2) bezüglich des statischen Körpers (1) verschiebt, da er mit einem beweglichen Teil (7) dieses Möbelelements verbunden ist, und der Kolben (2) weist eine zylindrische Form auf, die einen etwas geringeren Durchmesser aufweist als der Innenraum des Körpers (1) und die von mindestens einer Seite (8) und vorzugsweise zwei sich gegenüberliegenden Seiten (8) verändert wird, wobei dieser Kolben (2) im Gegensatz zu seiner Stange (3) eine sich verjüngende Abstufung aufweist und so eine koaxiale Verlängerung (9) bildet, die ebenfalls eine zylindrische Form aufweist, die durch mindestens eine und vorzugsweise zwei sich gegenüberliegende Seitenflächen (10) verändert wird, wobei um diese Verlängerung (9) herum eine zylindrische Hülse (11) angebracht ist, die eine geringere Länge und den gleichen Durchmesser wie der Kolben (2) aufweist und die sich entlang der Verlängerung (9) zwischen einem Anschlag, der am Ende der Hülse ausgebildet ist, und ihrer kompletten vorderen Anlehnung gegen den Kolben (2) selbst frei bewegen kann, da diese Hülse (11) einen etwas geringeren äußeren Durchmesser als den Innendurchmesser des Körpers (1) aufweist und einen Innendurchmesser aufweist, der zwischen dem äußeren Durchmesser der Verlängerung (9) des Kolbens und dem äußeren Durchmesser der Greifer der Verlängerung (12) enthalten ist; in der dargestellten, bevorzugten Ausführungsform wird eine Lösung bevorzugt, bei der die Seiten (8) und die Seitenflächen (10) zwei einander gegenüberliegende sind, allerdings versteht es sich, dass es mehr sein könnten und sie auf eine andere Art und Weise angeordnet werden könnten, oder es sich sogar nur um eine handeln könnte. Die bloße Ansicht von Figur 1 verdeutlicht die enorme bauliche Einfachheit und die geringen Kosten der verteidigten Vorrichtung. Nachstehend wird die große operative Einfachheit und Wirksamkeit erklärt.

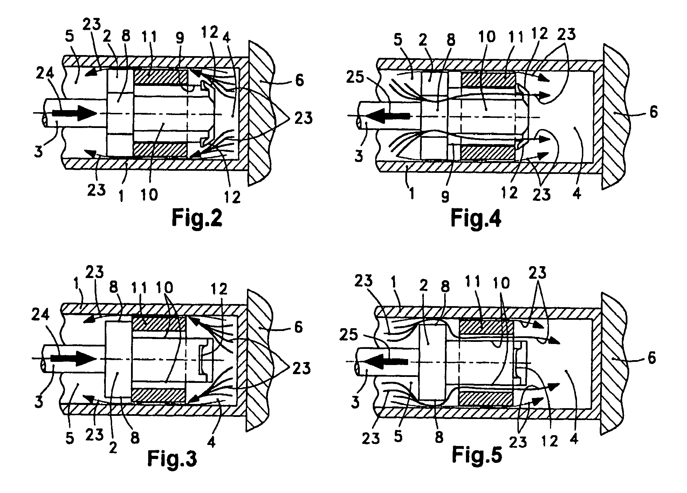

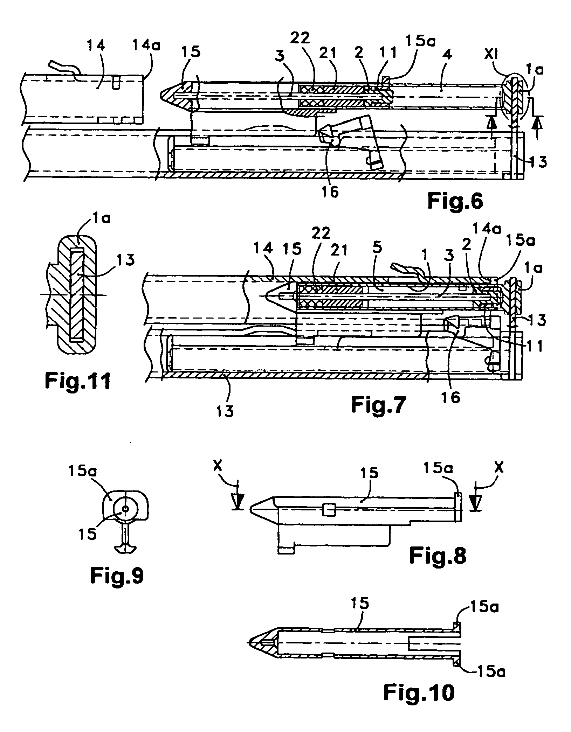

Die Funktionsweise wird mit Hilfe von Figur 2 bis 5 veranschaulicht. Figur 2 und 3 sind eine Seitenansicht und ein Grundriss, die die Dämpfungswirkung der Bremsung darstellen, wobei der Kolben (2) in einer Position gezeigt wird, in der er sich schon in der Nähe des Endes des Bremsweges (24) befindet und die für jeglichen Punkt dieses Bremsweges (24) gültig ist, sobald dieser begonnen wird; wie zu sehen ist, ist die zylindrische Hülse (11) an den Kolben (2) angelehnt, so dass sie den Durchlass der Flüssigkeit durch die Zwischenräume verschließt, die zwischen dieser Hülse (11) und den Seiten (8) des Kolbens (2) sowie den Seitenflächen (10) der Verlängerung (9) erzeugt werden, weshalb die Flüssigkeitsübertragung (23) zwischen der Kompressionskammer (4) und der Expansionskammer (5) nur durch den engen, zylindrischen Kranz stattfinden kann, der zwischen der Hülse (11) und dem Körper (1) gelassen worden ist, das heißt, durch eine reduzierte Durchflussmenge, die eine starke Wirkung verursacht, die die Bremsung herbeiführt. Im Gegensatz dazu stellen Figur 4 und 5 den Wiederaufladeweg (25) dar, wo sich die Hülse (11) bis zum äußeren Anschlag der Verlängerung (9) frei verschiebt, wodurch die Durchlässe zwischen der Hülse (11) und den Seiten (8) sowie den Seitenflächen (10) frei bleiben, was das Umfüllen der Flüssigkeit zwischen der Expansionskammer (5) und der Kompressionskammer (4) mit einer viel größeren Durchflussmenge wie bei der Bremsung und ein schnelles und einfaches Wiederaufladen ermöglicht.

Gemäß der Erfindung umfasst der Anschlag, der am Ende der Verlängerung (9) ausgebildet ist, einen Durchmesser, der durch elastischen Stoß bezüglich des Innendurchmessers der zylindrischen Hülse (11) angepasst wird; insbesondere wird dieser Anschlag, der am Ende der Verlängerung (9) ausgebildet ist, durch zwei Greifer (12) gebildet, die einander entgegengesetzt und gegenüberliegend angeordnet sind. Dies bedeutet, dass diese Greifer (12) einen Anschlag bilden, um die Aufstellung der Hülse (11) in der Verlängerung (9) beizubehalten und gleichzeitig die Anfangsaufstellung dieser Hülse (11) durch elastischen Stoß zu ermöglichen.

Diese wesentliche Anordnung der Erfindung ist auf die Bremsung von Schubläden anwendbar, die mit einer Selbsteinzugsvorrichtung (16) ausgestattet sind. Dies wird in Figur 6 und 7 veranschaulicht, wo das feste Gestell (6) durch ein festes Glied (13) ausgebildet ist, das mit einem Möbel verankert ist und zu einer ausziehbaren Führung (13-14) der Schublade dieses Möbels gehört, wobei der bewegliche Teil (7) das entsprechende bewegliche Glied dieser Führung (13-14) ist, das mit dieser Schublade verbunden ist, wobei der Körper (1) an dem festen Glied (13) befestigt ist und die Stange (3) des Kolbens (2) mit einem Träger (15) verbunden ist, der von dem beweglichen Teil (14) angetrieben wird, das wiederum von einer Selbsteinzugsvorrichtung (16) angetrieben wird, die aktiviert wird, wenn sich dieser bewegliche Teil (14) während des Schließens dem Ende der Strecke nähert; Figur 8 und 10 veranschaulichen die Anordnung des Trägers (15), dessen Vorrichtung der Erfindung an diese konkrete Anwendung angepasst ist; und Figur 11 zeigt eine Einzeldarstellung der Kopplung des Zylinderkörpers (1) an das feste Glied (13) der ausziehbaren Gleitführung (13-14).

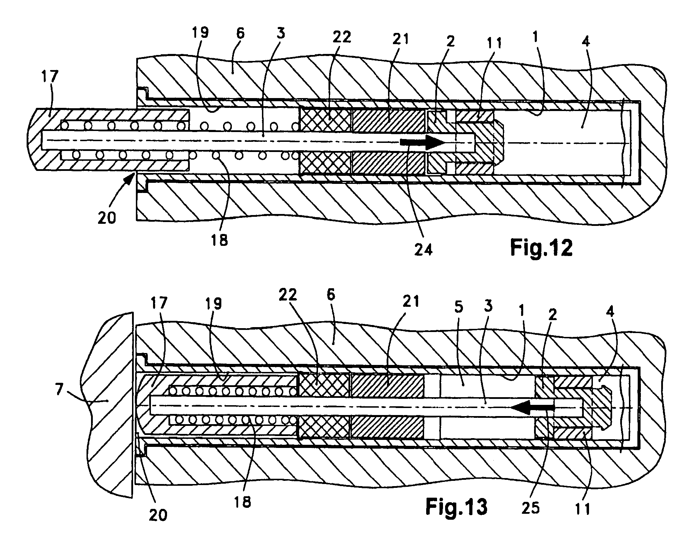

Eine andere Anwendung der Erfindung für die Bremsung beim Schließen von Türen wird in Figur 12 und 13 veranschaulicht; zu diesem Zweck ist das feste Gestell (6) der Vorderrahmen einer Schranktür, wobei der bewegliche Teil (7) die Tür ist, die über diesem Rahmen schließen soll, wobei der Körper (1) von der Vorderseite des statischen Rahmens eingespannt ist und das Ende der Stange (3) des Kolbens (2) an der Unterseite eines kappenförmigen Druckknopfes (17) befestigt ist, der um die Stange (3) herum eine schraubenförmige Kompressionsfeder (18) aufnimmt, die zwischen der Unterseite des Druckknopfes (17) und der Vorderseite wirkt, aus der die Stange (3) aus dem Körper (1) hervorragt, wobei die Feder (18) jeweils Zustände relativer Kompression und maximaler Entspannung annehmen kann, in denen der Druckknopf (17) bezüglich einer Öffnung (20), die am Ende einer Verlängerung (19) ausgebildet ist, die von der Wand des Körpers (1) bestimmt wird, eingedrückt oder hervorgestreckt sein kann, wobei die Öffnung (20) mit der Vorderseite des Rahmens für die Tür im festen Gestell (6) bündig ist; bei dieser Anwendung ist der bewegliche Teil (7) die Tür, die über dem Rahmen des festen Gestells (6) schließt.

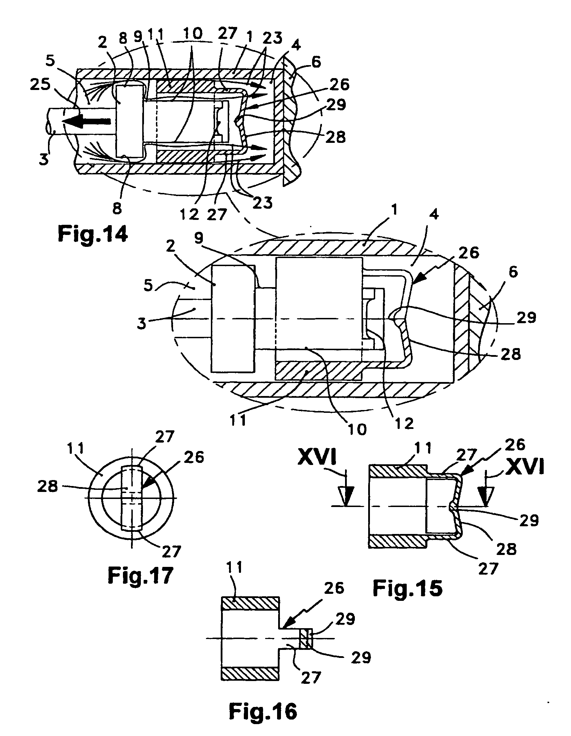

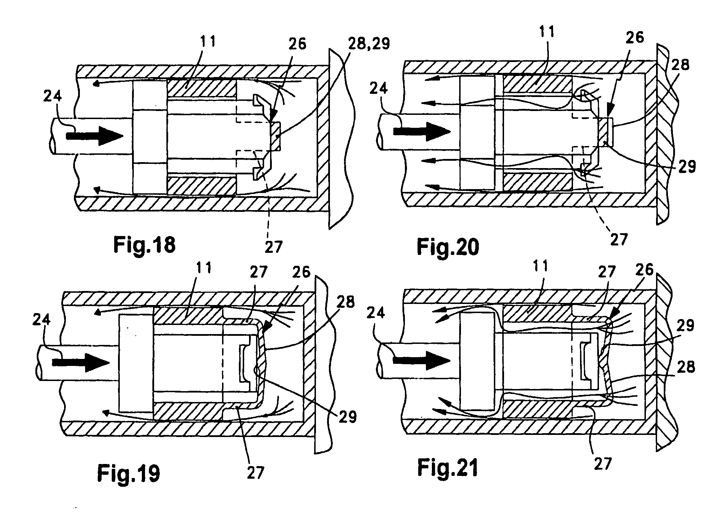

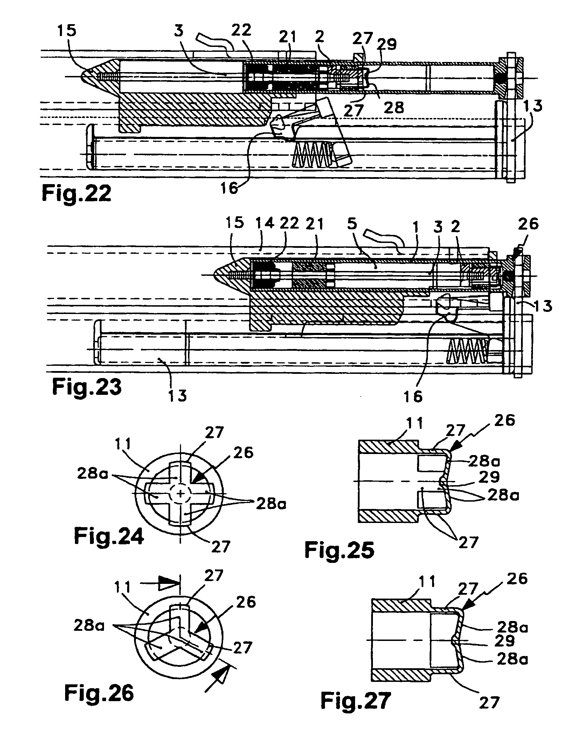

Bezüglich der vorstehend aufgezählten Zeichnungen und Bezugszeichen wird in den beigefügten Plänen eine bevorzugte Ausführungsform der von dem vorliegenden Patentzusatz beanspruchten Verbesserungen dargestellt. Die Aufgabe dieses Patentzusatzes wird in Figur 14 dargestellt, sein operativer Aufbau in Figur 15 bis 17, die funktionelle Form der neuen, zylindrischen Hülse (11), und in Figur 18 bis 21, seine besondere Funktionsweise; in Figur 22 und 23 wird seine Anwendung auf den Fall einer ausziehbaren Gleitführung (13-14) gezeigt, die mit einer Selbsteinzugsvorrichtung (16) versehen ist, und obwohl diese hier nicht ausführlich dargestellt ist, ist seine Anwendung auf den Fall einer Möbeltür offensichtlich, die in Figur 12 und 13 des Bezugspatents für die vorherige Version dieser zylindrischen Hülse (11) dargestellt ist.

Die Aufgabe des Patentzusatzes besteht insbesondere darin, dass sich die zylindrische Hülse (11) an der dem Kolben (2) gegenüberliegenden Vorderseite mittels eines elastoplastischen Streifens (26) verlängert, der sich von einem Ende bis zum anderen in Form einer Brücke erstreckt und die Spitze der Verlängerung (9) des Kolbens (2) überschreitet, dessen Streifen (26) von zwei in der Seitenlinie verlaufenden, paraxialen Abschnitten (27) und einem diametralen Abschnitt (28) definiert ist, der sich gemäß eines Hohlprofils erstreckt und im Scheitelpunkt seiner Innenseite einen hervorragenden Teil (29) bildet, der der Spitze der Verlängerung (9) des Kolbens (2) gegenüberliegt, wobei dieser hervorragende Teil (29) bezüglich der gegenüberliegenden Vorderseite der zylindrischen Hülse (11) in natürlichem Zustand oder im Ruhezustand eine geringere Entfernung aufweist als die operative Länge der Verlängerung (9) des Kolbens (2). Wie in den vorherigen Figuren gezeigt, weist der diametrale Abschnitt (28) des Streifens (26) diesbezüglich ein "V"-förmiges Hohlprofil auf.

Die Funktionsweise der Vorrichtung, die mit dieser neuen Variante der zylindrischen Hülse (11) ausgestattet ist, basiert auf der elastischen Deformierungskapazität des elastoplastischen Brückenstreifens (26) im Verhältnis zur darauf aufgewendeten Kraft. Wenn die Schublade oder Schiebetür auf dem Bremsweg (24) in Schließrichtung sanft angetrieben wird (unter dem Schwellwert der Kraft), beginnt die Verschiebung des Kolbens (2), den Streifen (26) elastisch zu deformieren, aber bevor dieser die Anlehnungsposition an die zylindrische Hülse (11) erreicht, wird ein Gleichgewicht zwischen dem elastischen Widerstand zur Deformierung des Streifens (26) und der Zugkraft hergestellt, die von dem Flüssigkeitsstrom erzeugt wird (Figur 20 und 21), so dass auf diesem Bremsweg (24) die Übertragung der Flüssigkeit in Richtung der Expansionskammer (5) nicht nur durch den dünnen, zylindrischen Kranz zwischen der zylindrischen Hülse (11) und dem Körper (1), sondern auch durch die physischen Durchlässe zwischen der zylindrischen Hülse einerseits und den Seiten (8) des Kolbens (2) und den Seitenflächen (10) der Verlängerung (9) dieses Kolbens (2) andererseits stattfindet; aus diesem Grund wird diese Betätigung sanfter oder mit einer geringeren Intensität der Dämpfungswirkung ausgeführt als bei der vorherigen Variante der zylindrischen Hülse (11). Wenn jedoch der Schließimpuls stärker ist als der Schwellwert, ermöglicht die elastische Deformierung des Streifens (26) die unmittelbare Anlehnung (Figur 18 und 19) zwischen der zylindrischen Hülse (11) und dem Kolben (2), weshalb der Bremsweg (24) auf die gleiche Weise stattfindet wie Figur 2 und 3 zeigen. Der Wiederaufladeweg (25) findet nach wie vor gemäß den Darstellungen von Figur 4 und 5 statt.

Die paraxialen Abschnitte (27) können mehr als zwei sein und der diametrale Abschnitt (28) kann in geeignete radiale Abschnitte (28a) abgeändert werden; wie in Figur 24 und 25 für die Ausführung mit vier radialen, kreuzförmigen Abschnitten (28a) dargestellt ist, können die radialen Abschnitte (28a) die Anzahl drei oder jegliche andere Anzahl aufweisen und symmetrisch angeordnet sein.

Zusammenfassend erreicht die gestellte Aufgabe durch den Patentzusatz, dass die Dämpfungswirkung unter einem bestimmten Schwellwert des zu dämpfenden Impulses im Verhältnis zu diesem Impuls veränderbar ist. Dies verringert die Schläge beim Schließen der Schubläden oder Schiebetüren in großem Maße und ist umso wichtiger, wenn, wie im Falle der Schubläden, eine Selbsteinzugsvorrichtung (16) vorhanden ist, die selbst einen Impuls erzeugt, um das vollständige Schließen derselben sicherzustellen.

## Patentansprüche

1. Dämpfungsvorrichtung für Möbel, die einen strömungsdynamischen Zylinder mit einer zähen Flüssigkeit aufweist, der in einem zylindrischen Körper (1) enthalten ist, dessen Länge größer als sein Durchmesser ist, und in dessen Ausbuchtung sich über die Länge ein Kolben (2) verschiebt, der eine Stange (3) aufweist, die aus dem Körper (1) hinausragt und jeweils eine Kompressionskammer (4) und eine Expansionskammer (5) begrenzt, die je nach Position des Kolbens (2) ein zwischen dem Minimum und dem Maximum veränderliches Volumen aufweisen, **dadurch gekennzeichnet, dass** der Körper (1) statisch mit dem festen Gestell (6) eines Möbelelements verankert bleibt, wobei sich der Kolben (2) bezüglich des statischen Körpers (1) verschiebt, da er mit einem beweglichen Teil (7) dieses Möbelelements verbunden ist, dessen Kolben (2) eine zylindrische Form aufweist, die einen etwas geringeren Durchmesser aufweist als der Innenraum des Körpers (1) und die von mindestens einer Seite (8) und vorzugsweise zwei sich gegenüberliegenden Seiten (8) verändert wird, wobei dieser Kolben (2) im Gegensatz zu seiner Stange (3) eine kleiner werdende Abstufung aufweist und so eine koaxiale Verlängerung (9) bildet, die ebenfalls eine zylindrische Form aufweist, die durch mindestens eine und vorzugsweise zwei sich gegenüberliegende Seitenflächen (10) verändert wird, wobei um diese Verlängerung (9) herum eine zylindrische Hülse (11) angebracht ist, die günstigerweise eine geringere Länge und den gleichen Durchmesser wie der Kolben (2) aufweist und die sich entlang der Verlängerung (9) zwischen einem Anschlag, der am Ende der Hülse ausgebildet ist, und ihrem kompletten vorderen Anbau gegen den Kolben (2) selbst frei bewegen kann, da diese Hülse (11) einen etwas geringeren äußeren Durchmesser als der Innendurchmesser des Körpers (1) aufweist und einen Innendurchmesser aufweist, der zwischen dem äußeren Durchmesser der Verlängerung (9) des Kolbens und dem äußeren Durchmesser der Greifer der Verlängerung (12) enthalten ist.

2. Dämpfungsvorrichtung für Möbel nach Anspruch 1, **dadurch gekennzeichnet, dass** der Anschlag, der am Ende der Verlängerung (9) ausgebildet ist, einen Durchmesser umfasst, der durch elastischen Stoß bezüglich des Innendurchmessers der zylindrischen Hülse (11) angepasst ist.

3. Dämpfungsvorrichtung für Möbel nach allen vorherigen Ansprüchen, **dadurch gekennzeichnet, dass** der Anschlag, der am Ende der Verlängerung (9) ausgebildet ist, durch zwei Greifer (12) gebildet ist, die einander entgegengesetzt und gegenüberliegend angeordnet sind.

4. Dämpfungsvorrichtung für Möbel nach allen vorherigen Ansprüchen, **dadurch gekennzeichnet, dass** das feste Gestell (6) durch ein festes Glied (13) ausgebildet ist, das mit einem Möbel verankert ist und zu einer ausziehbaren Führung (13-14) der Schublade dieses Möbels gehört, wobei der bewegliche Teil (7) das entsprechende bewegliche Glied dieser Führung (13-14) ist, das mit dieser Schublade verbunden ist, wobei der Körper (1) an dem festen Glied (13) befestigt ist und die Stange (3) des Kolbens (2) mit einem Träger (15) verbunden ist, der von dem beweglichen Teil (14) angetrieben wird, das wiederum von einer Selbsteinzugsvorrichtung (16) angetrieben wird, die aktiviert wird, wenn sich dieser bewegliche Teil (14) während des Schließens dem Ende der Strecke nähert.

5. Dämpfungsvorrichtung für Möbel nach den vorherigen Ansprüchen eins bis drei, **dadurch gekennzeichnet, dass** das feste Gestell (6) der Vorderrahmen einer Schranktür ist, wobei der bewegliche Teil (7) die Tür ist, die über diesem Rahmen schließen soll, wobei der Körper (1) von der Vorderseite des statischen Rahmens eingespannt ist und das Ende der Stange (3) des Kolbens (2) an der Unterseite eines kappenförmigen Druckknopfes (17) befestigt ist, der um die Stange (3) herum eine schraubenförmige Kompressionsfeder (18) aufnimmt, die zwischen der Unterseite des Druckknopfes (17) und der Vorderseite wirkt, aus der die Stange (3) aus dem Körper (1) hervorragt, wobei die Feder (18) jeweils Zustände relativer Kompression und maximaler Entspannung annehmen kann, in denen der Druckknopf (17) bezüglich einer Öffnung (20), die am Ende einer Verlängerung (19) ausgebildet ist, die von der Wand des Körpers (1) bestimmt wird, eingedrückt oder hervorgestreckt sein kann, wobei die Öffnung (20) mit der Vorderseite des Rahmens für die Tür im festen Gestell (6) bündig ist.

6. Dämpfungsvorrichtung für Möbel nach Anspruch eins, **dadurch gekennzeichnet, dass** sich die zylindrische Hülse (11) an der dem Kolben (2) gegenüberliegenden Vorderseite mittels eines elastoplastischen Streifens (26) verlängert, der sich in Form einer Brücke erstreckt und die Spitze der Verlängerung (9) des Kolbens (2) übertrifft, dessen Streifen (26) von zwei in der Seitenlinie verlaufenden, paraxialen Abschnitten (27) und einem diametralen Abschnitt (28) definiert ist, der sich gemäß eines Hohlprofils erstreckt und im Scheitelpunkt seiner Innenseite einen hervorragenden Teil (29) bildet, der der Spitze der Verlängerung (9) des Kolbens (2) gegenüberliegt, wobei dieser hervorragende Teil (29) bezüglich der gegenüberliegenden Vorderseite der zylindrischen Hülse (11) in natürlichem Zustand oder im Ruhezustand eine geringere Entfernung aufweist als die operative Länge der Verlängerung (9) des Kolbens (2).

7. Dämpfungsvorrichtung für Möbel nach Anspruch sechs, **dadurch gekennzeichnet, dass** der diametrale Abschnitt (28) des Streifens (26) ein "V"-förmiges Hohlprofil aufweist.

8. Dämpfungsvorrichtung für Möbel nach Anspruch sechs, **dadurch gekennzeichnet, dass** die paraxialen Abschnitte (27) mehr als zwei sein können und sich der diametrale Abschnitt (28) in die geeigneten radialen Abschnitte (28a) oder in Abschnitte mit einer anderen geometrischen Form umwandeln kann, wobei die bezüglich der Hülse elastische Konfiguration beibehalten wird, die den Durchflussabschnitt reguliert.

## Claims

1. Damping device for furniture, which has a flow-dynamic cylinder with a viscous fluid, which is contained in a cylindrical body (1), whose length is greater than its diameter, and in whose convexity a piston (2) is displaced over the length, the piston having a rod (3), which projects out of the body (1) and respectively defines a compression chamber (4) and an expansion chamber (5), each of which have a volume variable between the minimum and maximum according to the position of the piston (2), **characterised in that** the body (1) remains statically anchored to the fixed stand (6) of a furniture element, the piston (2) being displaced with respect to the static body (1), since it is connected to a moving part (7) of this furniture element, whose piston (2) has a cylindrical shape, which has a slightly smaller diameter than the interior of the body (1) and which is varied from at least one side (8) and preferably two opposing sides (8), this piston (2) having an extension (9) decreasing in stages conversely to its rod (3) and thus forming a coaxial extension (9), which also has a cylindrical shape, which is varied by at least one and preferably two opposite side faces (10), a cylindrical sleeve (11) being applied around this extension (9) and having advantageously a shorter length than and the same diameter as the piston (2), and being able to move freely itself along the extension (9) between a stop formed at the end of the sleeve and its complete front attachment, since this sleeve (11) has a slightly smaller outer diameter than the inner diameter of the body (1) and has an inner diameter which is contained between the outer diameter of the extension (9) of the piston and the outer diameter of the gripper of the extension (12).

2. Damping device for furniture according to claim 1, **characterised in that** the stop, which is formed at the end of the extension (9), has a diameter which is adapted by resilient impact relative to the inner diameter of the cylindrical sleeve (11).

3. Damping device for furniture according to all the preceding claims, **characterised in that** the stop formed at the end of the extension (9) is formed by two grippers (12), which are counter to one another and are disposed opposite one another.

4. Damping device for furniture according to all the preceding claims, **characterised in that** the fixed stand (6) is formed by a fixed member (13) which is anchored to a piece of furniture and belongs to an extensible guide (13-14) of the drawer of that piece of furniture, the moving part (7) being the corresponding moving member of this guide (13-14), which is connected to this drawer, the body (1) being fixed to the fixed member (13) and the rod (3) of the piston (2) being connected to a support (15), which is driven by the moving part (14), which is in trn driven by an automatic retraction device (16), which is actuated when this moving part (14) approaches the end of the distance during closing.

5. Damping device for furniture according to the preceding claims 1 to 3,**characterised in that** the fixed stand (6) is the front frame of a cupboard door, the moving part (7) being the door which is intended to close over the said frame, the body (1) being braced by the front face of the static frame and the end of the rod (3) of the piston (2) being fixed to the underside of a cap-shaped pushbutton (17), which receives around the rod (3) a helical compression spring (18), which acts between the underside of the pushbutton (17) and the front face, from which the rod (3) projects from the body (1), the spring (18) being capable of adopting respective states of relative compression and maximum relaxation in which states the pushbutton (17) can be pressed in or extended out relative to an aperture (20) formed at the end of an extension (19) determined by the wall of the body (1), in which case the aperture (20) Is flush with the front face of the frame for the door in the fixed stand (6).

6. Damping device for furniture according to claim 1, **characterised in that** the cylindrical sleeve (11) is extended on the front face opposite the piston (2) by means of a resiliently deformable strip (26), which extends in the form of a bridge and exceeds the tip of the extension (9) of the piston (2), whose strip (26) is defined by two paraxial sections (27) extending in the side line and a diametric section (28), which extends along a hollow profile and forms in the apex point of its inner face a projecting part (29), which is opposite the tip of the extension (9) of the piston (2), this projecting part (29) having a shorter distance from the opposing front face of the cylindrical sleeve (11) in the natural state or rest state than the operative length of the extension (9) of the piston (2).

7. Damping device for furniture according to claim 6, **characterised in that** the diametric section (28) of the strip (26) has a V-shaped hollow profile.

8. Damping device for furniture according to claim 6, **characterised in that** the paraxial sections (27) may be more than two and the diametric section (28) can convert into the appropriate radial sections (28a) or into sections with a different geometric shape, in which case the configuration which is resilient in terms of the sleeve regulates the flow cross-section.

## Revendications

1. Dispositif d'amortissement pour des meubles, présentant un cylindre ayant une caractéristique dynamique d'écoulement, avec un liquide visqueux contenu dans un corps (1) cylindrique, dont la longueur est supérieure à son diamètre et dans la cavité duquel, sur la longueur, se déplace un piston (2) présentant une tige (3), sortant du corps (1) et délimitant respectivement un chambre de compression (4) et une chambre d'expansion (5), présentant chacune, selon la proposition du piston (2), un volume variable entre le volume minimal et le volume maximal, **caractérisé en ce que** le corps (1) reste ancré statiquement au bâti (6) fixe d'un élément de meuble, le piston (2) se déplaçant par rapport au corps (1) cylindrique du fait qu'il est relié à une partie (7) mobile de cet élément de meuble, dont le piston (2) présente une forme cylindrique, présentant un diamètre un peu inférieur à 1'espace intérieur du corps (1) et la forme étant modifiée depuis au moins un cote (8) et, de préférence, deux cotes (8) opposés, sachant que ce piston (2), au contraire de sa tige (3), présente un échelonnement devenant plus petit et forme ainsi un prolongement (9) coaxial, présentant également une forme cylindrique, modifiée par au moins une et, de préférence, deux faces latérales (10) opposées, sachant qu'autour de ce prolongement (9) est montée une douille (11) cylindrique, ayant avantageusement une longueur inférieure et présentant le même diamètre que celui du piston (2) et pouvant se déplacer librement le long du prolongement (9), entre une butée, réalisée à l'extrémité de la douille, et son appui avant complet contre le piston (2) lui-même, du fait que cette douille (11) présente un diamètre extérieur un peu plus petit que le diamètre intérieur du corps (1) et présente un diamètre intérieur compris entre le diamètre extérieur du prolongement (9) du piston et le diamètre extérieur des éléments de saisie du prolongement (12).

2. Dispositif d'amortissement pour des meubles selon la revendication 1, **caractérisé en ce que** la butée réalisée à l'extrémité du prolongement (9) présente un diamètre qui, par un joint élastique, est adapté par rapport au diamètre intérieur de la douille (11) cylindrique.

3. Dispositif d'amortissement pour des meubles selon toutes les revendications précédentes, **caractérisé en ce que** la butée réalisée à l'extrémité du prolongement (9) est formée par deux éléments de saisie (12), disposés à l'opposé l'un de l'autre et orientes à l'inverse l'un de l'autre.

4. Dispositif d'amortissement pour des meubles selon toutes les revendications précédentes, **caractérisé en ce que** le bâti (6) fixe est formé par un organe (13) fixe, ancré à un meuble et appartenant à un guidage (13-14) extractible du tiroir de ce meuble, sachant que la partie (7) mobile est l'organe mobile correspondant, relié à ce tiroir, de ce guidage (13-14), le corps (1) étant fixé sur l'organe (13) fixe et la tige (3) du piston (2) étant reliée á un support (15) entraîné par la partie mobile (14), qui à son tour est entraîné par un dispositif d'auto-introduction (16), qui est activé lorsque cette partie (14) mobile s'approche de la fin de la course de déplacement pendant la fermeture.

5. Dispositif d'amortissement pour des meubles selon toutes les revendications un à trois précédentes, **caractérisé en ce que** le bâti (6) fixe est le cadre avant d'une porte d'armoire, la partie mobile (7) étant la porte, devant fermer sur ce cadre, le corps (1) étant enserré par la face avant du cadre statique, et l'extrémité de la tige (3) du piston (2) est fixée en face inférieure d'un bouton-pression (17) en forme de capuchon, recevant autour de la tige (3) un ressort de compression (18) à forme hélicoïdale, agissant entre la face inférieure du bouton-pression (17) et la face avant, d'où la tige (3) ressort du corps (1), le ressort (18) pouvant prendre respectivement des états de compression relative et de relaxation maximale, auxquels le bouton-pression (17) peut être enfoncé ou ressorti par rapport à une ouverture formée á l'extrémité d'un prolongement (19) déterminé par la paroi du corps (1), l'ouverture (20) étant en affleurement avec la face avant du cadre pour la porte dans le bâti (6) fixe.

6. Dispositif d'amortissement pour des meubles selon la revendication un, **caractérisé en ce que** la douille cylindrique (11) se prolonge sur la face avant opposée au piston (2), au moyen d'une bande (26) élastoplastique, s'étendant sous la forme d'un pont et qui franchit la pointe du prolongement (9) du piston (2), dont la bande (26) est définie par deux tronçons (27) paraaxiaux, s'étendant dans la ligue latérale, et un tronçon (28) diamétral, s'étendant selon un profil creux et formant, au sommet de sa face intérieure, une partie (29) en saillie, qui est opposée à la pointe du prolongement (9) du piston (2), cette partie (29) en saillie, à 1'état naturel ou à 1'état de repos par rapport à la face avant opposée de la douille (11) cylindrique, présentant une distance d'éloignement plus petite que la longueur fonctionnelle du prolongement (9) du piston (2).

7. Dispositif d'amortissement pour des meubles selon la 5 revendication six, **caractérisé en ce que** le tronçon (28) diamétral de la bande (26) présente un profil creux en forme de "V".

8. Dispositif d'amortissement pour des meubles selon la revendication six, **caractérisé en ce que** les tronçons (27) paraaxiaux peuvent être en nombre supérieur à deux, et le tronçon (28) diamétral peut être converti en les tronçons (28a) radiaux appropriés, ou en des tronçons ayant une autre forme géométrique, sachant que la configuration élastique par rapport à la douille15 est conservée, régulant le tronçon de passage d'un flux.
